(19) **Europäisches Patentamt**

**European Patent Office**

**Office européen des brevets**

(11) Veröffentlichungsnummer: **0 339 397 B1**

(12) **EUROPÄISCHE PATENTSCHRIFT**

(45) Veröffentlichungstag der Patentschrift: **23.12.92**

(21) Anmeldenummer: **89106698.7**

(22) Anmeldetag: **14.04.89**

(51) Int. Cl.⁵: **F16D 3/84**

(54) **Faltenbalg zum Schutz von Gelenkverbindungen.**

(30) Priorität: **23.04.88 DE 3813782**

(43) Veröffentlichungstag der Anmeldung:
**02.11.89 Patentblatt 89/44**

(45) Bekanntmachung des Hinweises auf die
Patenterteilung:
**23.12.92 Patentblatt 92/52**

(84) Benannte Vertragsstaaten:
**BE ES FR GB IT NL**

(56) Entgegenhaltungen:
**EP-A- 0 157 559**
**EP-A- 0 288 694**
**DE-A- 1 525 900**
**FR-A- 2 572 478**
**GB-A- 1 218 729**

(73) Patentinhaber: **Boge, Sonja-Alexandra**
**Carstensstrasse 38**
**W-3100 Celle(DE)**

(72) Erfinder: **Boge, Ferdinand**
**Carstensstrasse 38**
**W-3100 Celle(DE)**

(74) Vertreter: **Fritz, Edmund Lothar, Dipl.-Chem.**
**et al**
**Patentanwaltskanzlei Fritz Mühlenberg 74**
**W-5760 Arnsberg 1(DE)**

## Beschreibung

Die Erfindung bezieht sich auf einen Faltenbalg zum Schutz von Gelenkverbindungen mit dem Merkmal nach dem Oberbegriff des Patentanspruchs.

Faltbälge dieser Art bestehen aus Gummiwerkstoff und haben eine kegelförmige Grundform. Der Bereich mit dem kleineren Durchmesser ist zum Aufziehen auf eine Gelenkwelle vorgesehen, der größere Durchmesserbereich zum Aufziehen auf ein zylindrisches Gelenkteil. Speziell hat ein Faltenbalg der in Rede stehenden Art an jedem Endbereich mehrere Anschlußstellen. Mit sämtlichen Anschlußstellen,so wie der Faltenbalg hergestellt wird, hat er eine maximale Länge. Er kann an jedem Ende durch Abschneiden einer bzw. zweier Anschlußstellen gekürzt werden, so daß sich insgesamt sechs Möglichkeiten an Kürzungen ergeben. Zwischen den Anschlußstellen befinden sich jeweils eine oder mehrere Falten. Die Abstände der Anschlußstellen sind so gewählt, daß alle sechs Zuschnittsmöglichkeiten eine unterschiedliche Länge ergeben.

Bei einem bekannten Faltenbalg gleicher Art (DE-PS 33 24 997) gehen die Rechtecknuten an den Anschlußstellen, die zur Aufnahme von Spannbändern dienen, beidseitig im wesentlichen in eine Falte über. Bekannt ist außer diesem Stand der Technik ein Gleitflächenschutz für hydraulische Zylinder in Form eines Faltenbalges (DE-A-15 25 900) sowie eine Schutzmanschette zum passenden Umschließen einer geschmierten Gelenkverbindung (EP-A-0 157 559), die zwar Einzelmerkmale der vorgenannten Gattung, jedoch nicht die Möglichkeit einer variierten Anpassung an unterschiedliche Längen aufweisen.

Die Aufgabe der Erfindung besteht darin, einen Faltenbalg der Eingangs genannten Art weiterzuentwickeln, speziell im Hinblick auf den Anschluß an Kardangelenke und Doppelkardangelenke unter Beibehaltung der Möglichkeit verschiedene Längen zuzuschneiden.

Diese Aufgabe wird durch ein Faltenbalg mit den Merkmalen nach dem Patentanspruch gelöst.

Bei einem solchen Faltenbalg hat man an den Anschlußstellen im größeren Durchmesserbereich jeweils zwei Möglichkeiten eines Zuschnitts, entweder mit T-Flansch oder ohne den T-Flansch. Den T-Flansch wird man insbesondere dann belassen, wenn der Anschluß an ein Kardangelenk erfolgt, wo durch den T-Flansch eine zusätzliche Abdichtung durch Anlage an einer Scheibe erreicht wird. Die Halbkreisnut und der Halbkreiswulst bei den Anschlußstellen im größeren Durchmesserbereich bietet die Möglichkeit bei einem sogenannten Doppelkardangelenk dort einen zweiten Faltenbalg mit Verrastung und Verspannung durch ein Spannband dicht anzuschließen.

Im folgenden werden Ausführungsbeispiele der Erfindung näher beschrieben unter Bezugnahme auf die beiliegenden Zeichnungen.

Fig. 1 zeigt einen Profilschnitt durch einen ungekürzten Universal-Faltenbalg nach der Erfindung in natürlichem oder etwas vergrößertem Maßstab;

Fig. 2 zeigt die Verbindung eines solchen, jedoch gekürzten Faltenbalges mit den beiden Scheiben eines Maschinenteils und eines Kardangelenkes;

Fig. 3 stellt eine Verbindung zweier Faltenbälge zur Abdichtung eines Doppel-Kardangelenkes dar.

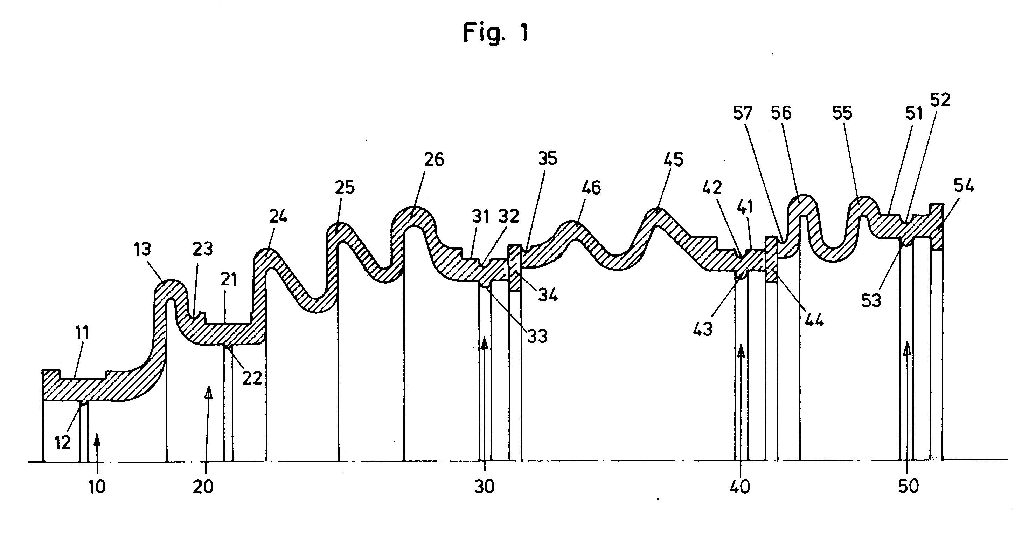

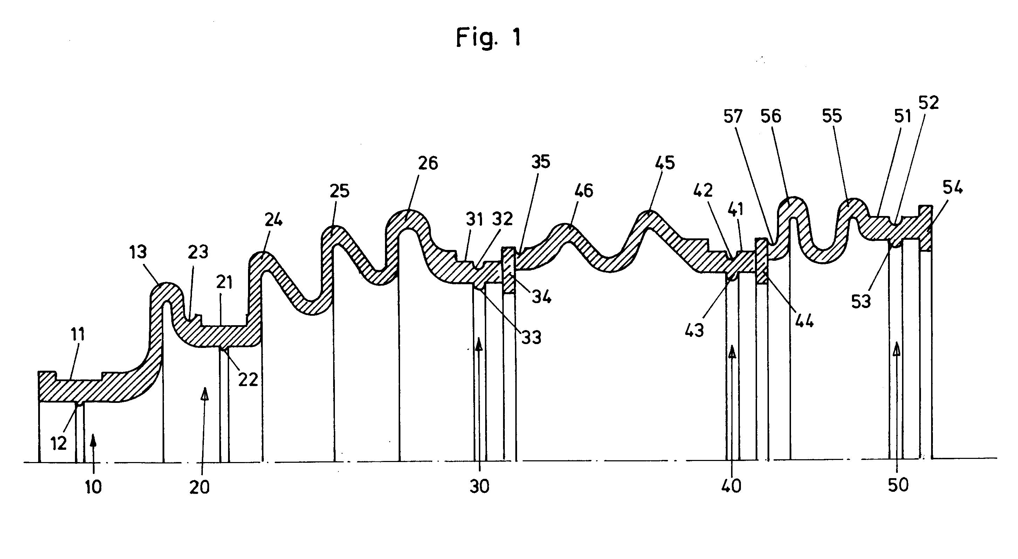

Der ungekürzte Faltenbalg, wie er auf Fig. 1 im Profil dargestellt ist, besteht aus einem zweckentsprechenden Gummi-Werkstoff und stellt insgesamt ein Rotationsteil um die Achse 1 dar. Die Grundform ist kegelförmig, das heißt, der Durchmesser der Falten nimmt vom engen Ende zum weiten Ende hin zu. Das enge Ende, auf Fig. 1 links dargestellt, besteht aus einem zylindrischen Endabschnitt 1o, an dem außen eine Rechtecknut 11 zur Aufnahme eines Spannbandes gebildet ist und innen eine Dichtungslippe 12. An den zylindrischen Abschnitt schließt sich eine erste verhältnismäßig steile Falte 12 an. Diese geht über in einen zweiten zylindrischen Abschnitt 20 mit etwas größerem Durchmesser, an dem gleichfalls außen eine Rechtecknut 21 zur Aufnahme eines Spannbandes und innen eine Dichtungslippe 22 geformt ist. Zwischen Rechtecknut und der ersten Falte 23 ist eine Trennrille 23 geformt, welche die Stelle kennzeichnet, wo der Faltenbalg gekürzt werden kann.

Im Anschluß an den zweiten zylindrischen Abschnitt 2o befinden sich weitere Falten 24, 25 und 26 mit ansteigenden Durchmessern. Die beiden zylindrischen Abschnitte 1o und 2o sind geeignet zur Verbindung des Faltenbalges mit einem zylindrischen Maschinenteil, zum Beispiel einer Welle.

Der dritte zylindrische Abschnitt 3o, der sich an die Falte 26 anschließt, weist gleichfalls außen eine Rechtecknut 31 auf zur Aufnahme eines Spannbandes, an welche sich in T-Anordnung ein Flansch 34 anschließt. Am Boden der Rechtecknut ist eine Halbkreisnut 32 gebildet, welcher ein im Querschnitt entsprechender Halbkreiswulst 33 innenseitig gegenüberliegt. An einer Trennrille 35 kann neben dem dritten zylindrischen Abschnitt der Faltenbalg getrennt werden.

Der sich rechts daran anschließende Teil besteht aus relativ flachen Falten 46 und 45 und aus einem sich daran anschließenden vierten zylindrischen Abschnitt 4o, ebenfalls geeignet zum Anschluß an ein scheibenförmiges Maschinenteil mit Rechtecknut 41, Halbkreisnut 42 und Halbkreiswulst 43 sowie Flansch 44.

Der fünfte zylindrische Abschnitt 5o, welcher den weiten Endabschnitt darstellt, endigt gleichfalls in einem Flansch 54, zwischen dem und der Falte 55 eine Rechtecknut 51 gebildet ist, mit Halbkreisnut 52 und gegenüberliegend einem Halbkreiswulst 53. Zur Abtrennung des Endabschnitts ist eine weitere Trennrille 57 vorgesehen.

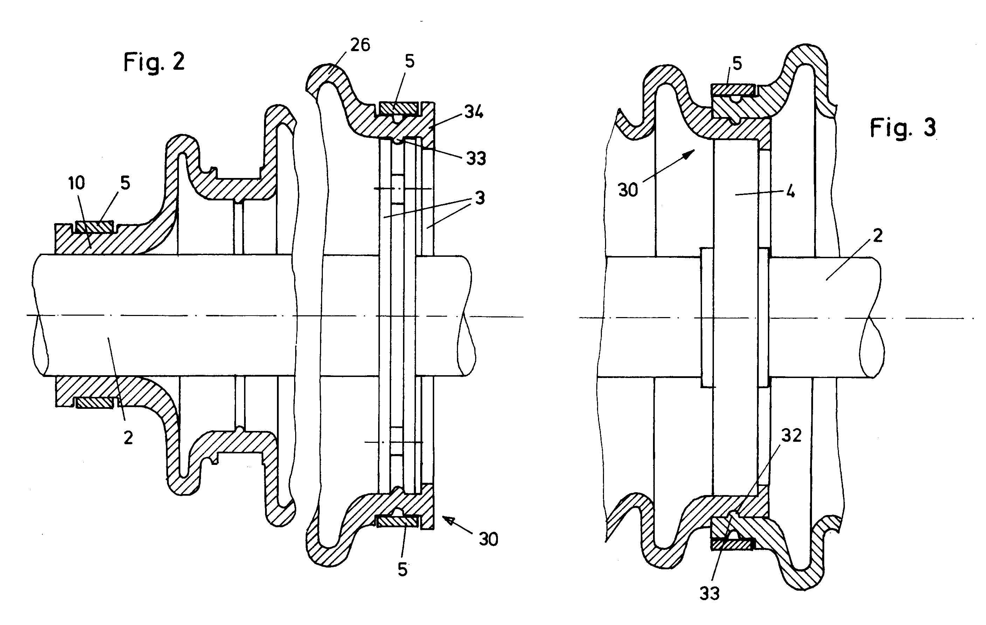

Fig. 2 zeigt einen gekürzten Faltenbalg, der linksseitig an eine Welle 2 und rechtsseitig an zwei Scheiben 3 angeschlossen ist, die beispielsweise Teil eines Kardangelenkes sein können. Der Faltenbalg nach Fig. 2 umfaßt die zylindrischen Abschnitte 1o, 2o und 3o gemäß Fig. 1. An der Trennrille 35 ist eine Trennung vorgenommen worden.

Der erste zylindrische Abschnitt 1o ist auf die Welle 2 aufgezogen und zusätzlich mit Hilfe eines Spannbandes 5 gesichert, das von der Rechtecknut 11 aufgenommen ist.

Der dritte zylindrische Abschnitt 3o dient zur Verbindung des Faltenbalges mit dem auf Abstand eingestellten Doppelscheiben 3. Dabei liegt der Halbkreiswulst 33 zwischen den Scheiben, der T-Flansch 34 liegt an der rechten Scheibe außen an. Mit Hilfe eines Spannbandes, aufgenommen von der Rechtecknut 31, wird die Verbindung gesichert.

Gemäß Fig. 3 ist ein Maschinenteil, zum Beispiel ein Doppel-Kardangelenk, links und rechts von einer Scheibe 4 durch Faltenbälge abgedeckt. Dabei liegt der linke Faltenfalg direkt am Umfang der Scheibe an. Auf diesen Faltenbalg ist der rechtsseitige Faltenbalg mit dem entsprechenden zylindrischen Abschnitt 3o aufgezogen. Dabei wird der Halbkreiswulst 33 des aufliegenden Faltenbalges von der Nut 32 des darunterliegenden Faltenbalges aufgenommen. Beide Faltenbälge sind durch ein Spannband gesichert.

## Patentansprüche

**1.** Faltenbalg zum Schutz von Gelenkverbindungen mit folgenden Merkmalen:
- am einen Endbereich sind zwei Befestigungsstellen mit einer dazwischenliegenden Falte (13) von unterschiedlichen kleineren Durchmessern vorgesehen;
- am anderen Endbereich sind drei Befestigungsstellen mit unterschiedlichen größeren Durchmessern und mindestens eine dazwischenliegenden Falte (45, 46, 55, 56) vorgesehen;
- an jeder Befestigungsstelle ist eine Rechtecknut (11, 21, 31, 41, 51) zur Aufnahme eines Spannbandes gebildet;
gekennzeichnet durch die nachfolgenden weiteren Merkmale:
- an den Befestigungsstellen im größeren Durchmesserbereich ist jeweils innenseitig ein Halbkreiswulst (33, 43, 53) geformt und im Boden der Rechtecknut (31, 41, 51) jeweils eine Halbkreisnut (32, 42, 52) geeignet zur Aufnahme eines Halbkreiswulstes eines anderen Faltenbalges;
- im größeren Durchmesserbereich ist jeweils im Anschluß an die Rechtecknut (31, 41, 51) ein T-Flansch (34, 44, 54) gebildet.

## Claims

**1.** Bellows for the protection of hinge connections having the following characteristics:
- at one end region there are provided two fastening points of different smaller diameters having an intermediary ply (13);
- at the other end region there are provided three fastening points of different larger diameters having at least one intermediary ply (45, 46, 55, 56);
- at each fastening point there is formed a rectangular groove (11, 21, 31, 41, 51) for receiving a tension strap;
caracterised by the following further features:
- at the fastening points in the region of the larger diameters there is formed at the interior side a semicircular bead (33, 43, 53) and at the bottom of the rectangular groove (31, 41, 51) there is formed a semicircular groove (32, 42, 52) adapted for receiving a semicircular bead of another bellows;
- in the region of the larger diameters there is provided a T-shaped flange (34, 44, 54) adjacent to the rectangular groove (31, 41, 51).

## Revendications

**1.** Soufflet de protection pour assemblages articulés avec les caractéristiques suivantes:
- deux points de fixation de diamètres différents plus petits renfermant un pli (13) sont prévus sur une des deux extrémités du soufflet;
- l autre extrémité comporte trois points de fixation ayant des diamètres différents plus grands et renfermant au moins un pli (45, 46, 55, 56);
- chaque point de fixation comporte une rainure rectangulaire (11, 21, 31, 41, 51) destinée à recevoir un collier de serrage;
caractérisé par les caractéristiques suivantes:
- chaque point de fixation de la partie du soufflet ayant un diamètre plus grand comporte à l'intérieur un bourrelet demi-circulaire (33, 43, 53) ainsi que dans le fond de la rainure rectangulaire (31, 41, 51) une rainure demi-circulaire (32, 42, 52) apropriée à recevoir un bourrelet demi-circulaire d'un autre soufflet;

- un bride en T (34, 44, 54) se trouve directement après la rainure rectangulaire (31, 41, 51) dans la partie du soufflet ayant un diamètre plus grand.

## Fig. 1

Fig. 1

EP 0 339 397 B1

Fig. 3

Fig. 2